# EUROPEAN PATENT SPECIFICATION

(11) **EP 3 133 519 B1**
(45) Date of publication and mention of the grant of the patent: **26.12.2018**
(21) Application number: 14889274.8
(22) Date of filing: 04.06.2014
(51) Int. Cl.: G06F 21/32, G06F 1/16, H04M 1/67, H04M 1/725

(54) **METHOD FOR UNLOCKING SCREEN OF MOBILE TERMINAL BY MEANS OF RETINA INFORMATION MATCHING**
VERFAHREN ZUM ENTSPERREN DES BILDSCHIRMS EINES MOBILEN ENDGERÄTS MITTELS ABGLEICHUNG VON NETZHAUTINFORMATIONEN
PROCÉDÉ POUR DÉVERROUILLER L'ÉCRAN D'UN TERMINAL MOBILE AU MOYEN D'UNE MISE EN CORRESPONDANCE D'INFORMATIONS DE RÉTINE

(30) Priority: 14.04.2014 CN 201410147312
(43) Date of publication of application: 22.02.2017
(73) Proprietor: Huizhou TCL Mobile Communication Co., Ltd., Huizhou, Guangdong 516006 (CN)
(72) Inventor: HU, Binghui, Hui Zhou Guangdong 516006 (CN)
(74) Representative: ZHAOffice SPRL
(86) International application number: PCT/CN2014/079132
(87) International publication number: WO 2015/158032

(56) References cited:
- EP-A1- 2 869 528
- CN-A- 103 218 142
- CN-A- 103 678 960
- CN-A- 103 678 981
- US-A1- 2005 221 798
- US-A1- 2013 167 212
- US-A1- 2014 079 296
- US-B1- 8 560 004

## Description

### FIELD OF THE INVENTION

The present disclosure generally relates to screen unlocking of a mobile terminal, and more particularly, to a method for achieving screen unlocking of a mobile terminal through retina information matching.

### BACKGROUND OF THE INVENTION

As mobile terminals become more and more popular, people's lives have been more closely related to the mobile terminals. It is inconvenient to unlock a mobile phone through sliding movement on the touch area or by inputting a password, especially at the work that requires a high efficiency.

However, wearable devices have found application in people's lives and provide more diversified applications for users. Besides, the wearable devices bring about more conveniences to the numerous consumers and improve the living quality of the people.

If the screen of a mobile terminal can be unlocked through device cooperation and information matching when the user is using the wearable device, e.g., if the mobile terminal can be unlocked automatically when the mobile terminal is put at 30 cm right in front of the user, then it will make the operation very convenient for the user. However, this technology is not yet available in the real life.

Accordingly, there is still a need to make improvements and advancements on the conventional technologies.

EP 2869528A1 discloses a method for performing authentication in a portable electronic device. The method includes identifying whether a peripheral electronic device is located within a certain distance from the portable electronic device, receiving biometrics information from the peripheral electronic device when the peripheral electronic device is located within the certain distance from the portable electronic device, identifying whether the biometrics information received from the peripheral electronic device is identical to biometrics information stored in the portable electronic device, and releasing security set to the portable electronic device when the biometrics information received from the peripheral electronic device is identical to the biometrics information stored in the portable electronic device.

US 20130167212A1 discloses a method for providing secure access to an electronic device by combining two or more security features of authentication processed at substantially the same time where at least one of the factors is a "tolerant" factor.

US 8560004B1 discloses a sensor-based activation of an input device. The method can include receiving a first signal from a first sensor of a mobile computing device, where the first signal represents a first action of a user of the mobile computing device, activating a second sensor of the mobile computing device based at least in part on the first signal, receiving a second signal from the second sensor, where the second signal represents a second action of the user of the mobile computing device, and activating an input device of the mobile computing device based at least in part on the first and second signals.

### SUMMARY OF THE INVENTION

In view of the aforesaid shortcomings of the prior art, an objective of the present disclosure is to provide a method for achieving screen unlocking of a mobile terminal through retina information matching, which can rapidly and conveniently unlock the screen of the mobile terminal through device cooperation and information matching.

To achieve the aforesaid objective, technical solutions adopted by the present disclosure are as follows.

A method for achieving screen unlocking of a mobile terminal in a standby state, wherein a screen of the mobile terminal is locked, through retina information matching is provided, which comprises the following steps of:
A. storing first retina information of a user of the mobile terminal for screen unlocking into the mobile terminal;
B. searching and determining, by a BLUETOOTH (BT) sensor in a retina reading device, whether the mobile terminal within a distance of 0.2m to 1m with a low-frequency signal: when it is determined that the mobile terminal is not within that distance, searching again, by the BT sensor in the retina reading device, with a high-frequency signal after 2 seconds, and when the mobile terminal is found, connecting the retina reading device with the mobile terminal automatically via a BT protocol, wherein the retina reading device is a wearable device;
C. reading second retina information and transmitting the second retina information to the mobile terminal by the retina reading device;
D. receiving the second retina information and matching the second retina information against the first retina information by the mobile terminal; and
E. if the second retina information matches the first retina information, then generating a screen unlocking instruction to unlock the screen of the mobile terminal.

Preferably, in the method for achieving screen unlocking of a mobile terminal through retina information matching, the step A specifically comprises:
A1. receiving an operation instruction by the mobile terminal to activate a retina unlocking mode;
A2. setting the first retina information for the retina unlocking mode; and
A3. receiving and storing the retina information.

Preferably, in the method for achieving screen unlocking of a mobile terminal through retina information matching, the step C specifically comprises:
C10. taking a photo of the retina by the retina reading device to obtain a retina image;
C20. processing the retina image by the retina reading device to obtain the second retina information having retina features; and
C30. transmitting the second retina information to the mobile terminal.

Preferably, in the method for achieving screen unlocking of a mobile terminal through retina information matching, the step C specifically comprises:
C100. taking a photo of the retina by the retina reading device to obtain a retina image;
C200. transmitting the retina image to the mobile terminal; and
C300. processing the retina image by the mobile terminal to obtain the second retina information having retina features.

Preferably, in the method for achieving screen unlocking of a mobile terminal through retina information matching, the step A3 specifically comprises:
capturing the first retina information by a camera of the mobile terminal; and
storing the captured first retina information into the mobile terminal.

Preferably, in the method for achieving screen unlocking of a mobile terminal through retina information matching, the step A3 specifically comprises:
reading the first retina information by the retina reading device; and
transmitting the first retina information from the retina reading device to the mobile terminal and storing the first retina information into the mobile terminal.

Preferably, in the method for achieving screen unlocking of a mobile terminal through retina information matching, the method for achieving screen unlocking of a mobile terminal through retina information matching cooperates with other screen unlocking mechanisms.

In the method for achieving screen unlocking of a mobile terminal through retina information matching according to the present disclosure, the retina reading device reads retina information of the user and then transmits the retina information to the mobile terminal that is connected with the retina reading device so as to unlock the mobile terminal through matching. The need of device cooperation and retina information matching makes it more difficult to unlock the mobile terminal so that the personal information becomes more secure. The retina reading device of the present disclosure can be connected with the mobile terminal through induction as long as the retina reading device and the mobile terminal are within a set range with respect to each other. Thus, the user can unlock the mobile terminal simply by putting the mobile terminal in front of him/her, which is simple and convenient; and only the user itself can unlock the mobile terminal in this way.

### BRIEF DESCRIPTION OF THE DRAWINGS

FIG. 1 is a flowchart diagram of a method for achieving screen unlocking of a mobile terminal through retina information matching according to the present disclosure; and
FIG. 2 is a structural view of a system for achieving screen unlocking of a mobile terminal through retina information matching.

### DETAILED DESCRIPTION OF THE INVENTION

The present disclosure provides a method for achieving screen unlocking of a mobile terminal through retina information matching. To make the objectives, technical solutions and effects of the present disclosure clearer and more definite, the present disclosure will be further detailed with reference to the attached drawings and examples hereinafter. It shall be appreciated that, the specific embodiments described herein are only for purpose of illustration rather than limitation.

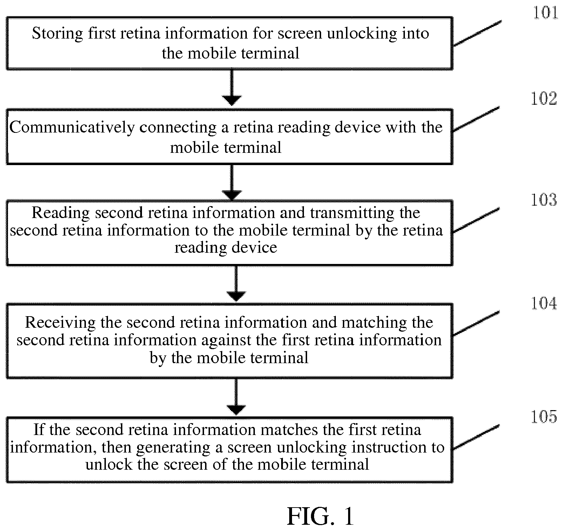

FIG. 1 is a flowchart diagram of a method for achieving screen unlocking of a mobile terminal through retina information matching according to the present disclosure. As shown in FIG. 1, the method for achieving screen unlocking of a mobile terminal through retina information matching comprises the follow steps.

101. storing first retina information for screen unlocking into the mobile terminal.

Specifically, the mobile terminal described in the step 101 is a mobile phone and a tablet computer with the Android system, the Internetwork Operating System (IOS) system or the Windows Phone (WP) system, etc. In implementation of the present disclosure, the mobile terminal needs to be switched to a retina unlocking mode which is a kind of screen locking mode of the system of the mobile terminal. After the retina unlocking mode is activated, retina information (i.e., first retina information) of the user needs to be set for the retina unlocking mode during the first-time use. The first retina information is used for matching with the inputted retina information, and if the first retina information matches the inputted retina information, then the mobile terminal is unlocked. The first retina information can be stored in many ways. For example, a camera of the mobile terminal may be utilized to capture the retina of the user, or a retina reading device may be utilized to read the retina information of the user, and then the retina information of the user read by the retina reading device is transmitted and stored into the mobile terminal. The retina reading device mentioned herein refers to a wearable device, e.g., Google Glasses produced by Google, and thus the retina reading device can read the retina information of the user timely and conveniently. The retina reading device is provided with a communication module (i.e., a second communication module) and a reading module. The second communication module is used for communication with a first communication module disposed in the mobile terminal, and the reading module is for use by the retina reading device to take a photo of the retina to obtain a retina image.

102. communicatively connecting a retina reading device with the mobile terminal.

Specifically, the retina reading device described in the step 102 is provided with a second communication module, and the second communication module communicates with the first communication module disposed in the mobile terminal. Further, the first communication module is a first NFC communication module, and the second communication module is a second NFC communication module. NFC (Near Field Communication) refers to a short-distance high-frequency radio technology. The NFC technology works within a distance of 20 cm at a frequency of 13.56 MHz, and the transmission speed thereof includes 106 Kbit/s, 212 Kbit/s and 424 Kbit/s. Currently, the NFC technology has been accepted by the ISO/IEC IS 18092 international standard, the ECMA-340 standard and the ETSI TS 102 190 standard. The NFC technology adopts both an active reading mode and a passive reading mode. The present disclosure adopts the NFC technology but does not adopt the aforesaid standards, and the NFC technology can be defined in the present disclosure. For example, the sensing distance of the NFC technology can be defined in such a way that the mobile terminal can be connected with the retina reading device if they are within a set distance from each other, and the set distance is 1 m, 0.5 m, 0.3 m or 0.2 m. The first communication module is a first BT communication module, and the second communication module is a second BT communication module. Both the first BT communication module and the second BT communication module are BT sensors. When the mobile terminal is in a standby state, the BT sensor firstly searches and determines whether there is a unique mobile terminal within a distance of 0.2 m to 1 m with a low-frequency signal; and if there is, then it is determined that there is a short distance between the BT sensor and the mobile terminal. If no mobile terminal has been found, then the BT sensor searches again with a high-frequency signal after 2 s, and in this case, it is determined that the distance between the BT sensor and the mobile terminal is greater than 1 m, i.e., there is a long distance between the BT sensor and the mobile terminal. During the aforesaid process, the retina reading device is automatically connected with the mobile terminal when there is induction therebetween.

103. reading second retina information and transmitting the second retina information to the mobile terminal by the retina reading device.

Specifically, in the step 103, the retina reading device reads the second retina information after the retina reading device is communicatively connected with the mobile terminal in the aforesaid step 102. Further, the retina reading device takes a photo of the retina to obtain a retina image, processes the retina image to obtain the second retina information having retina features, and transmits the second retina information to the mobile terminal. The retina reading device may also read the second retina information in the following step in the present disclosure: taking a photo of the retina by the retina reading device to obtain a retina image; transmitting the retina image to the mobile terminal; and processing the retina image by the mobile terminal to obtain the second retina information having retina features. The aforesaid two processes differ in the processing of the retina information. If the retina information is to be processed by the retina reading device, then different brands of retina reading devices may process the retina information in different procedures and thus generate different processing results for the same retina information. However, if the retina information is to be processed by the mobile terminal, then the retina reading device is only used to take a photo of the retina, and the captured retina image is then processed by the mobile terminal with the same procedure and the same algorithm to obtain the same result.

104. receiving the second retina information and matching the second retina information against the first retina information by the mobile terminal.

Specifically, in the step 104, the mobile terminal receives the second retina information transmitted by the retina reading device, or receives and processes the second retina image transmitted by the retina reading device to obtain the second retina information, and then matches the second retina information against the first retina information. This process is known in the prior art, and thus will not be further described herein.

105. if the second retina information matches the first retina information, then generating a screen unlocking instruction to unlock the screen of the mobile terminal.

Specifically in the step 105, if the second retina information matches the first retina information, then a screen unlocking instruction for the mobile terminal is generated, and the mobile terminal receives the unlocking instruction to unlock the screen. It shall be appreciated that, the method for achieving screen unlocking of a mobile terminal through retina information matching according to the present disclosure can coexist with other screen unlocking mechanisms. Thus, in cases where the user cannot use the retina information to unlock the screen for some reason, he/she can still use other unlocking mechanisms to unlock the screen, which will not influence the use of the mobile terminal.

In the method for achieving screen unlocking of a mobile terminal through retina information matching, the step A specifically comprises:
A1. receiving an operation instruction by the mobile terminal to activate a retina unlocking mode;
A2. setting the first retina information for the retina unlocking mode; and
A3. receiving and storing the retina information.

In the method for achieving screen unlocking of a mobile terminal through retina information matching, the step of communicatively connecting a retina reading device with the mobile terminal comprises:
communicatively connecting the mobile terminal with the retina reading device via the NFC protocol, or
communicatively connecting the mobile terminal with the retina reading device via the BT protocol.

In the method for achieving screen unlocking of a mobile terminal through retina information matching, the step C specifically comprises:
C10. taking a photo of the retina by the retina reading device to obtain a retina image;
C20. processing the retina image by the retina reading device to obtain the second retina information having retina features; and
C30. transmitting the second retina information to the mobile terminal.

In the method for achieving screen unlocking of a mobile terminal through retina information matching, the step C specifically comprises:
C100. taking a photo of the retina by the retina reading device to obtain a retina image;
C200. transmitting the retina image to the mobile terminal; and
C300. processing the retina image by the mobile terminal to obtain the second retina information having retina features.

In the method for achieving screen unlocking of a mobile terminal through retina information matching,
the mobile terminal can be connected with the retina reading device if they are within a set distance from each other, and the set distance is 1 m, 0.5 m, 0.3 m or 0.2 m. According to the technical solutions of the present disclosure, the set distance cannot be set too large. Specifically, the retina reading device described in the present disclosure is a wearable device (like a pair of glasses), while the mobile terminal described in the present disclosure is usually put in a pocket. If the pocket is a pants pocket, then the distance between the location of the pocket and the location of eyes of the user is about 60 cm; and if the pocket is a coat pocket, then the distance between the location of the pocket and the location of the eyes is about 30 cm. If the set distance is too large, then the mobile terminal will remain unlocked all the time. Generally speaking, the user unlocks the mobile terminal only when he/she uses the mobile terminal; that is, the distance between the mobile terminal and the eyes of the user is generally less than 30 cm when the mobile terminal is put in front of the user. Thus, the set distance between the mobile terminal and the retina reading device is preferably 0.3 cm in the present disclosure.

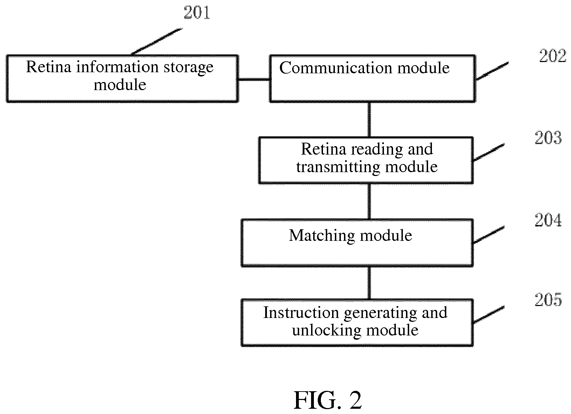

FIG. 2 is a structural view of a system for achieving screen unlocking of a mobile terminal through retina information matching. As shown in FIG. 2, the system for achieving screen unlocking of a mobile terminal through retina information matching comprises:
a retina information storage module 201, for storing first retina information for screen unlocking into the mobile terminal, specifically as described above;
a communication module 202 for communicatively connecting a retina reading device with the mobile terminal, specifically as described above;
a retina reading and transmitting module 203 for use by the retina reading device to read second retina information and transmit the second retina information to the mobile terminal, specifically as described above;
a matching module 204 for use by the mobile terminal to receive the second retina information and match the second retina information against the first retina information, specifically as described above; and
an instruction generating and unlocking module 205 for generating a screen unlocking instruction to unlock the screen of the mobile terminal if the second retina information matches the first retina information, specifically as described above.

In the system for achieving screen unlocking of a mobile terminal through retina information matching, the retina information storage module 201 specifically comprises:
a mode activating module for use by the mobile terminal to receive an operation instruction to activate a retina unlocking mode, specifically as described above;
a retina information setting module for setting the first retina information for the retina unlocking mode, specifically as described above; and
a storage module for receiving and storing the retina information, specifically as described above.

In the system for achieving screen unlocking of a mobile terminal through retina information matching, the communication module 202 comprises:
a first NFC communication module disposed in the mobile terminal and a second NFC communication module disposed in the retina reading device, specifically as described above, or
a first BT communication module disposed in the mobile terminal and a second BT communication module disposed in the retina reading device, specifically as described above.

In the system for achieving screen unlocking of a mobile terminal through retina information matching, the retina reading and transmitting module 203 specifically comprises:
a reading module for use by the retina reading device to take a photo of the retina to obtain a retina image, specifically as described above;
a processing module for use by the retina reading device to process the retina image to obtain the second retina information having retina features, specifically as described above; and
a transmitting module for transmitting the second retina information to the mobile terminal, specifically as described above.

In the system for achieving screen unlocking of a mobile terminal through retina information matching, the retina reading and transmitting module 203 specifically comprises:
a reading module for use by the retina reading device to take a photo of the retina to obtain a retina image, specifically as described above;
a transmitting module for transmitting the retina image to the mobile terminal, specifically as described above; and
a processing module for use by the mobile terminal to process the retina image to obtain the second retina information having retina features, specifically as described above.

In the system for achieving screen unlocking of a mobile terminal through retina information matching,
the mobile terminal can be connected with the retina reading device if they are within a set distance from each other, and the set distance is 1 m, 0.5 m, 0.3 m or 0.2 m, specifically as described above.

In the method for achieving screen unlocking of a mobile terminal through retina information matching according to the present disclosure, the retina reading device reads retina information of the user and then transmits the retina information to the mobile terminal that is connected with the retina reading device so as to unlock the mobile terminal through matching. The need of device cooperation and retina information matching makes it more difficult to unlock the mobile terminal so that the personal information is more secure. The retina reading device of the present disclosure can be connected with the mobile terminal through induction as long as the retina reading device and the mobile terminal are within a set range with respect to each other. Thus, the user can unlock the mobile terminal simply by putting the mobile terminal in front of him/her, which is simple and convenient; and only the user itself can unlock the mobile terminal in this way.

What described above are only the embodiments of the present disclosure, but are not intended to limit the scope of the present disclosure.

## Claims

1. A method for achieving screen unlocking of a mobile terminal in a standby state, wherein a screen of the mobile terminal is locked, through retina information matching, comprising the following steps of:
A) storing first retina information of a user of the mobile terminal for screen unlocking into the mobile terminal (101); **characterized in that**, further comprising:
B) searching and determining, by a Bluetooth, BT, sensor in a retina reading device, whether the mobile terminal is within a distance of 0.2m to 1m with a low-frequency signal: when it is determined that the mobile terminal is not within that distance, searching again, by the BT sensor in the retina reading device, with a high-frequency signal after 2 seconds, and when the mobile terminal is found, and in this case, it is determined that the distance between the BT sensor and the mobile terminal is greater than 1 m, connecting the retina reading device with the mobile terminal automatically via a BT protocol, wherein the retina reading device is a wearable device;
C) reading second retina information and transmitting the second retina information to the mobile terminal by the retina reading device (103);
D) receiving the second retina information and matching the second retina information against the first retina information by the mobile terminal (104); and
E) if the second retina information matches the first retina information, then generating a screen unlocking instruction to unlock the screen of the mobile terminal (105).

2. The method for achieving screen unlocking of a mobile terminal through retina information matching of claim 1, wherein the step C specifically comprises:
C10) taking a photo of the retina by the retina reading device to obtain a retina image;
C20) processing the retina image by the retina reading device to obtain the second retina information having retina features; and
C30) transmitting the second retina information to the mobile terminal.

3. The method for achieving screen unlocking of a mobile terminal through retina information matching of claim 1, wherein the step C specifically comprises:
C100) taking a photo of the retina by the retina reading device to obtain a retina image;
C200) transmitting the retina image to the mobile terminal; and
C300) processing the retina image by the mobile terminal to obtain the second retina information having retina features.

4. The method for achieving screen unlocking of a mobile terminal through retina information matching of claim 1, wherein the step A specifically comprises:
A1) receiving an operation instruction by the mobile terminal to activate a retina unlocking mode;
A2) setting the first retina information for the retina unlocking mode; and
A3) receiving and storing the retina information.

5. The method for achieving screen unlocking of a mobile terminal through retina information matching of claim 4, wherein the step A3 specifically comprises:
capturing the first retina information by a camera of the mobile terminal; and
storing the captured first retina information into the mobile terminal.

6. The method for achieving screen unlocking of a mobile terminal through retina information matching of claim 4, wherein the step A3 specifically comprises:
reading the first retina information by the retina reading device; and
transmitting the first retina information from the retina reading device to the mobile terminal and storing the first retina information into the mobile terminal.

7. The method for achieving screen unlocking of a mobile terminal through retina information matching of any of claims 1 to 6, wherein the method for achieving screen unlocking of a mobile terminal through retina information matching cooperates with other screen unlocking mechanisms.

## Patentansprüche

1. Verfahren zum Entsperren des Bildschirmes eines mobilen Endgeräts im Wartezustand, wobei ein Bildschirm des mobilen Endgeräts verriegelt ist, mittels Abgleichung von Netzhautinformationen, die folgenden Schritte umfassend:
A) Speichern erster Netzhautinformationen eines Benutzers des mobilen Endgeräts in das mobile Endgerät zum Entsperren eines Bildschirmes (101);
**dadurch gekennzeichnet, dass** es weiter umfasst:
B) Suchen und Bestimmen mittels eines Bluetooth-BT-Sensors in einem Netzhautlesegerät, ob das mobile Endgerät sich innerhalb eines Abstands von 0,2 m bis 1m befindet, mit einem Niederfrequenzsignal: wenn es bestimmt ist, dass das Endgerät sich nicht innerhalb dieses Abstands befindet, erneutes Suchen, durch das BT-Sensor im Netzhautlesegerät, mittels eines Hochfrequenzsignals nach zwei Sekunden, und, wenn das mobile Endgerät gefunden ist, in diesem Fall ist es bestimmt, dass der Abstand zwischen dem BT-Sensor und dem mobilen Endgerät grösser als 1 m ist, automatisches Verbinden des Netzhautlesegeräts mit dem mobilen Endgerät über ein BT-Protokoll, wobei das Netzhautlesegerät ein tragbares Gerät ist;
C) Lesen zweiter Netzhautinformationen und Übertragen der zweiten Netzhautinformationen an das mobile Endgerät vom Netzhautlesegerät (103);
D) Empfangen der zweiten Netzhautinformationen und Abgleichen der zweiten Netzhautinformationen gegenüber den ersten Netzhautinformationen mit dem mobilen Endgerät (104); und
E) wenn die zweiten Netzhautinformationen mit den ersten Netzhautinformationen abgleichen, dann Erzeugen eines Bildschirmentsperrungsbefehls zum Entsperren des Bildschirms des mobilen Endgeräts (105).

2. Verfahren zum Entsperren des Bildschirmes eines mobilen Endgeräts mittels Abgleichung von Netzhautinformationen nach Anspruch 1, wobei Schritt C spezifisch umfasst:
C10) Machen einer Aufnahme der Netzhaut mittels des Netzhautlesegeräts zum Erhalten eines Netzhautbildes;
C20) Verarbeitung des Netzhautbildes mittels des Netzhautlesegeräts zum Erhalten der zweiten Netzhautinformationen, die Netzhautmerkmale umfassen; und
C30) Übertragen der zweiter Netzhautinformationen an das mobile Endgerät.

3. Verfahren zum Entsperren des Bildschirmes eines mobilen Endgeräts mittels Abgleichung von Netzhautinformationen nach Anspruch 1, wobei Schritt C spezifisch umfasst:
C100) Machen einer Aufnahme der Netzhaut mittels des Netzhautlesegeräts zum Erhalten eines Netzhautbildes;
C200) Übertragen des Netzhautbildes an das mobile Endgerät; und
C300) Verarbeitung des Netzhautbildes mittels des mobilen Endgeräts zum Erhalten der zweiten Netzhautinformationen, die Netzhautmerkmale umfassen

4. Verfahren zum Entsperren des Bildschirmes eines mobilen Endgeräts mittels Abgleichung von Netzhautinformationen nach Anspruch 1, wobei Schritt A spezifisch umfasst:
A1) Empfangen eines Betriebsbefehls mittels des mobilen Endgeräts zur Aktivierung eines Netzhautentriegelungsmodus;
A2) Einstellen der ersten Netzhautinformationen für den Netzhautentriegelungsmodus;
A3) Empfangen und Speichern der Netzhautinformationen.

5. Verfahren zum Entsperren des Bildschirmes eines mobilen Endgeräts mittels Abgleichung von Netzhautinformationen nach Anspruch 4, wobei Schritt A3 spezifisch umfasst:
Erfassen der ersten Netzhautinformationen mittels eines Fotoapparats des mobilen Endgeräts; und
Speichern der ersten Netzhautinformationen in das mobile Endgerät.

6. Verfahren zum Entsperren des Bildschirmes eines mobilen Endgeräts mittels Abgleichung von Netzhautinformationen nach Anspruch 4, wobei Schritt A3 spezifisch umfasst:
Lesen der ersten Netzhautinformationen vom Netzhautlesegerät; und
Übertragen der ersten Netzhautinformationen vom Netzhautlesegerät an das mobile Endgerät und Speichern der Netzhautinformationen in das mobile Endgerät.

7. Verfahren zum Entsperren des Bildschirmes eines mobilen Endgeräts mittels Abgleichung von Netzhautinformationen nach einer der Ansprüche 1 bis 6, wobei das Verfahren zum Entsperren des Bildschirmes eines mobilen Endgeräts mittels Abgleichung von Netzhautinformationen mit anderen Bildschirmentriegelungsmechanismen zusammenwirkt.

## Revendications

1. Procédé de déverrouillage de l'écran d'un terminal mobile à l'état d'attente, dans lequel un écran du terminal mobile est verrouillé, au moyen d'une mise en correspondance d'informations de rétine, procédé comprenant les étapes suivantes de:
A) enregistrer des premières informations de rétine d'un utilisateur du terminal mobile destinées à déverrouiller l'écran, dans le terminal mobile (101);
procédé **caractérisé en ce qu'**il comprend en outre:
B) rechercher et déterminer par un capteur Bluetooth, BT, dans un dispositif de lecture de rétine, si le terminal mobile se trouve à une distance de 0,2 m à 1 m avec un signal basse fréquence: lorsqu'il est déterminé que le terminal mobile ne se trouve pas à cette distance, rechercher à nouveau, au moyen du capteur BT dans le dispositif de lecture de rétine, avec un signal haute fréquence après deux secondes, et, lorsque le terminal mobile est trouvé, dans ce cas il est déterminé que la distance entre le capteur BT et le terminal mobile est supérieure à 1 m, connecter le dispositif de lecture de rétine au terminal mobile automatiquement par l'intermédiaire d'un protocole BT, le dispositif de lecture de rétine étant est dispositif portable;
C) lire des deuxièmes informations de rétine et transmettre les deuxièmes informations de rétine au terminal mobile par le dispositif de lecture de rétine (103);
D) recevoir les deuxièmes informations de rétine et mettre en correspondance les deuxièmes informations de rétine par rapport aux premières informations de rétine par le terminal mobile (104); et
E) si les deuxièmes informations de rétine correspondent aux premières informations de rétine, alors générer une instruction de déverrouillage d'écran afin de déverrouiller l'écran du terminal mobile (105).

2. Procédé de déverrouillage de l'écran d'un terminal mobil au moyen d'une mise en correspondance d'informations de rétine selon la revendication 1, dans lequel l'étape C comprend spécifiquement:
C10) prendre une photo de la rétine par le dispositif de lecture de rétine afin d'obtenir une image de la rétine;
C20) traitement de l'image de la rétine par le dispositif de lecture de rétine afin d'obtenir les deuxièmes informations de rétine présentant des caractéristiques de rétine; et
C30) transmettre les deuxièmes informations de rétine au terminal mobile.

3. Procédé de déverrouillage de l'écran d'un terminal mobile au moyen d'une mise en correspondance d'informations de rétine selon la revendication 1, dans lequel l'étape C comprend spécifiquement:
C100) prendre une photo de la rétine par le dispositif de lecture de rétine afin d'obtenir une image de la rétine;
C200) transmettre l'image de la rétine au terminal mobile; et
C300) traitement de l'image de la rétine par le terminal mobile afin d'obtenir les deuxièmes informations de rétine présentant des caractéristiques de rétine.

4. Procédé de déverrouillage de l'écran d'un terminal mobile au moyen d'une mise en correspondance d'informations de rétine selon la revendication 1, dans lequel l'étape A comprend spécifiquement:
A1) recevoir une instruction opérationnelle par le terminal mobile afin d'activer un mode de déverrouillage de rétine;
A2) régler les premières informations de rétine pour le mode de déverrouillage de rétine; et
A3) recevoir et enregistrer les informations de rétine.

5. Procédé de déverrouillage de l'écran d'un terminal mobile au moyen d'une mise en correspondance d'informations de rétine selon la revendication 4, dans lequel l'étape A3 comprend spécifiquement:
capturer les premières informations de rétine par un appareil photographique du terminal mobile, et
enregistrer les premières informations de rétine capturées dans le terminal mobile.

6. Procédé de déverrouillage de l'écran d'un terminal mobile au moyen d'une mise en correspondance d'informations de rétine selon la revendication 4, dans lequel l'étape A3 comprend spécifiquement:
faire lire les premières informations de rétine par le dispositif de lecture de rétine; et
transmettre les premières informations de rétine du dispositif de lecture de rétine au terminal mobile et enregistrer les premières informations de rétine dans le terminal mobile.

7. Procédé de déverrouillage de l'écran d'un terminal mobile au moyen d'une mise en correspondance d'informations de rétine selon l'une quelconque des revendications 1 à 6, dans lequel le procédé de déverrouillage de l'écran d'un terminal mobile au moyen d'une mise en correspondance d'informations de rétine coopère avec d'autres mécanismes de déverrouillage d'écran.
